# EUROPEAN PATENT APPLICATION

(11) **EP 1 193 630 A1**
(43) Date of publication of application: **03.04.2002**
(21) Application number: 01122668.5
(22) Date of filing: 28.09.2001
(51) Int. Cl.: G06F 17/60

(54) **Agile information system and management method**

(30) Priority: 29.09.2000 JP 2000299841
(71) Applicant: Nec Miyagi, Ltd., Miyagi (JP)
(72) Inventor: Gau, Mikihiro, Taiwacho, Kurokawa-gun, Miyagi (JP); Osanai, Mitsuhiko, Taiwacho, Kurokawa-gun, Miyagi (JP); Ando, Takashi, Taiwacho, Kurokawa-gun, Miyagi (JP); Chiba, Hidenobu, Taiwacho, Kurokawa-gun, Miyagi (JP); Kadowaki, Hideaki, Taiwacho, Kurokawa-gun, Miyagi (JP)
(74) Representative: VOSSIUS & PARTNER

(57) **Abstract**

In an information processing system, information defining a business process is classified into demand information, which is a request instruction from a requester, and supply information, which is a result report to the requester, this demand and supply information being stored into a 5W1H-format database, in which the information is made up combinations of 5W (who, whom, when, where, and what) and 1H (how) elemental information, management of a business process being performed based on these information.

## Description

The present invention relates to an information processing system, and more particularly to a system and a method for managing a business process, and an associated computer program.

In recent years, in response to rapid changes in the business environment, it has become extremely difficult for information systems to keep pace with frequently occurring BPRs (business process reengineering) and changes business processes proposed by quality control activities, typified by the small-group KAIZEN activities at production sites.

In particular in a production system used in a high-tech business, the business process is undergoing a process of change, and the product life cycle is constantly being shortened, and this situation will become more prevalent in the future. With this as a backdrop, the failure of information systems to keep pace becomes a roadblock that hinders progress in improving processes.

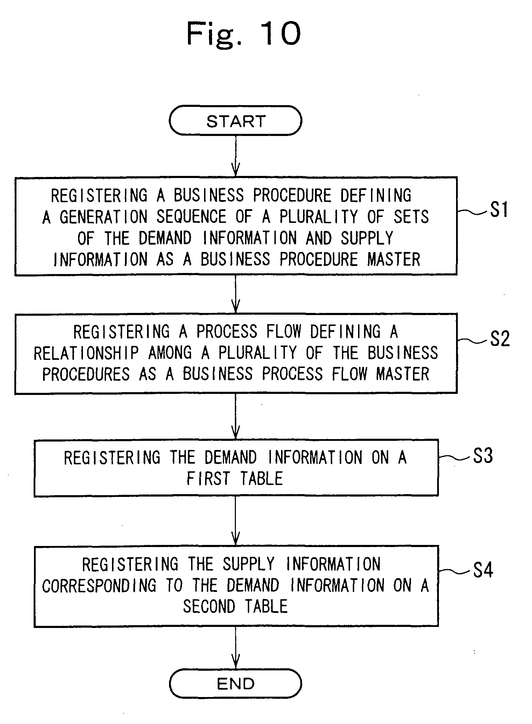

Fig. 10 of the accompanying drawings is a drawing showing in schematic form of a conventional information management system. In the past, application packages such as an enterprise resource planning (ERP) aims at generalizing the business practice based on existing successful introductions of ERP so that it could be used by other companies, and reflecting what is called "best practice", associated algorithms being encompassed within the package or within a standard package database.

For example, in an order inflow process, this is formed by an order receipt function (a) and the order inflow table (b) of the standard package database.

In the system configuration shown in Fig. 10, when the order inflow process undergoes a change, the individual functions (modules) within the ERP package and even the table structure of the associated database needed to be changed. If the business process is a new process, and in the case in which it is difficult to add a new table or change a table, for example, there are cases in which the change cannot be achieved.

Accordingly, it is an object of the present invention, in view of the above-noted drawbacks in the existing art, to provide a system and a method capable of quick accommodation to process changes, without the need, for example, to make functional changes to modules. It is a further object of the present invention to provide a computer program associated with the above-noted system.

To achieve the above-noted objects, the present invention adopts the following described technical constitution.

Specifically, information that defines the above-noted business process can be classified into demand information, which provides instructions from a demand side, and supply information, which is performance report information from the demand side. The demand information and supply information are expressed as combinations of "5W1H" information (made up of information "5W" information including regard to who, whom, when, where, what and the "1H" information with regard to how), and a means for storing this 5W1H elemental information in a 5W1H database of a storage apparatus is provided, and it is further possible to add attribute information to the 5W1H elemental information stored in the database.

In the present invention, the above-noted demand information and the corresponding supply information of the business process are treated as a set of information, a business procedure that establishes the generation sequence of a plurality of sets of information, and a business flow of a plurality of business procedures are each stored as master tables in the storage apparatus, with the above-noted business process being executed by a data processing apparatus, in accordance with the contents of the master tables of the business procedures and business flow.

The present invention provides a system capable of agile accommodation to changes in a business process, in an information system responsible for handing processing of business processes subject to frequent changes in response to, for example, changes in the business environment and Kaizen activities.

Information handled in a business process can be classified into demand/instruction (request) information and performance report information, and the present invention makes use of this pairing of these two types of information, the former being expressed as "demand" and the latter being expressed as "supply" in this specification, the two types of basic information related to a business process are used in the present system.

Because above-mentioned "demand" and "supply" information can be expressed in terms of who, whom, when, where, and what (5W information) and how (1H information), these basic information are recorded in a 5W1H database.

A sequence is applied to the generation pattern of a supply-demand pair, a plurality of patterns are arranged into a group, which is established as a business procedure, mutual relationships therebetween being established so as to establish a flow of business procedures, enabling control of the information system.

Various individual information required in the information processing system are executed by information defined in an optional processing master.

By applying the present invention as described above to an information processing system, it is possible to quickly change a business process.

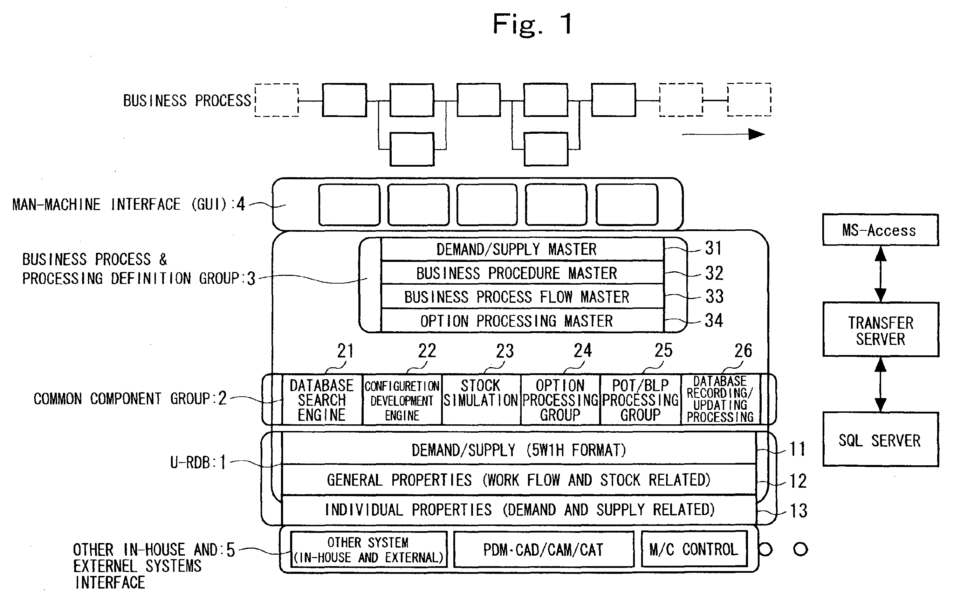

In the present invention, the portion that defines the business process and processing is recorded in a database as shown in Fig. 1, and by changing the defined information of this table, it is possible to implement an information processing system capable of quickly accommodating frequent changes in a business process.

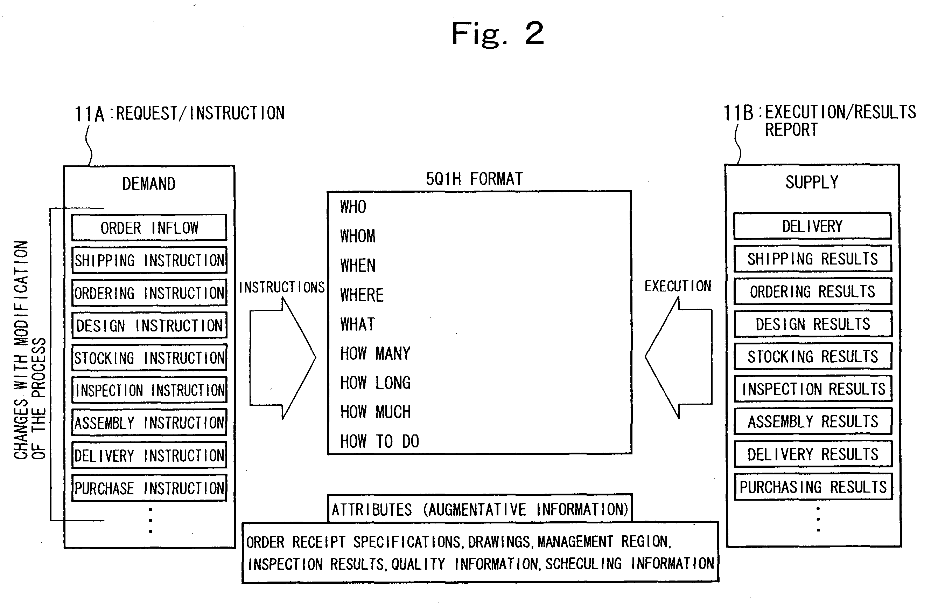

A database generated in accordance with a combination of the process definitions, as shown in Fig. 2, is created using "5W4H" format information, which includes information with regard to who, whom, when, where, and what (5W information) and information with regard to how many, how long, how much, and how to do (4H information).

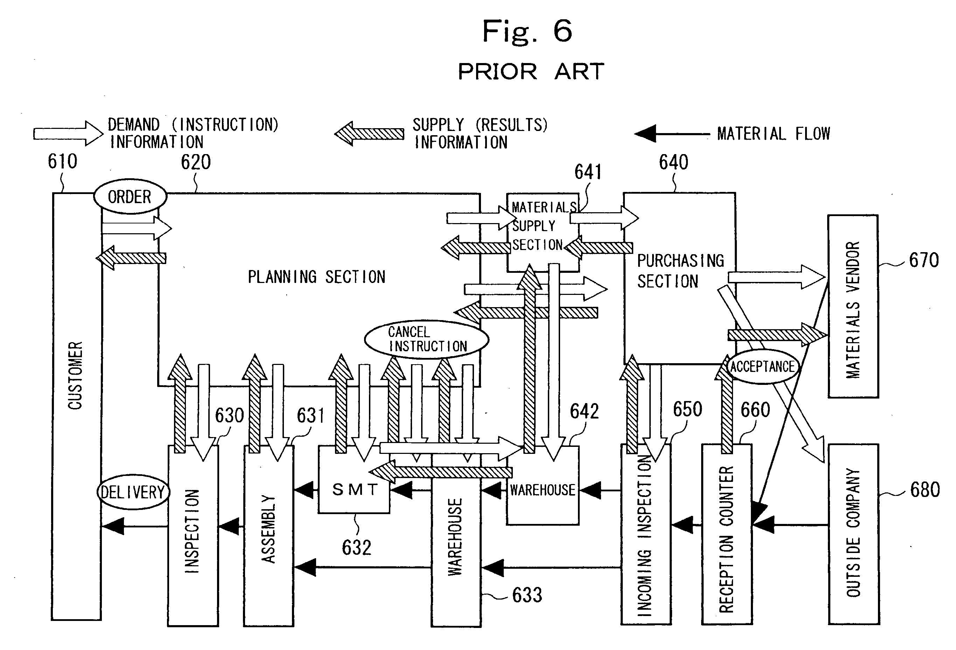

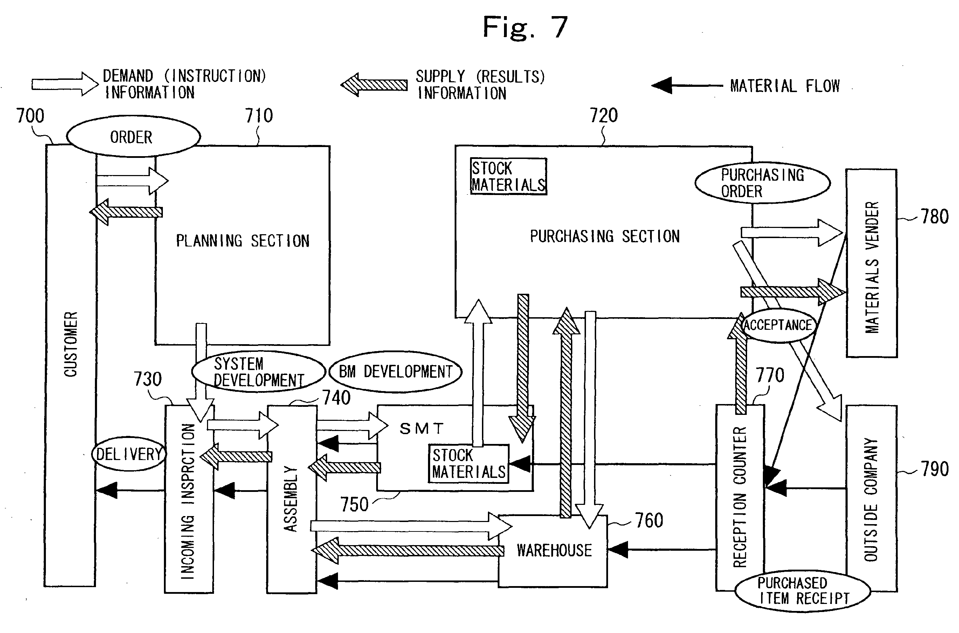

In the past few years, from the results of a series of in-house verification, using the 5W1H data definition method, it has been possible to identify the basic information for all business processes, thereby establishing the foundation for the present invention. Fig. 6 and Fig. 7 show an example of these verifications.

Fig. 6 is a drawing showing the conventional business model at a target factory, the production method of which was a push-type system focused on the a planning department. A planning department 620, upon receiving an order from a client (business unit) 610, performs development of product configuration, and instructs to a purchasing section 640 to perform material procurement and instructs to a production instruction section 630 to manufacture. In Fig. 6, the white-background arrows indicate demand information, and the hatched arrows indicate supply information, with solid-line arrows indicating material flow.

In the case in which material and information (demand information and supply information) flow in the manner shown in Fig. 6, if the demand information and supply information are each 5W1H demand/supply information, these can be expressed as follows.

The base of each arrow indicates "who".

The destination of each arrow indicates "to whom".

Products and parts that are the subject of instructions are indicated as "what".

Actual instructions for procurement, delivery, assembly and inspection are indicated as "how to do".

On the contrary, Fig. 7 shows pull-type business model adopting a lean production system, this being a business model in which the system is completely reversed from that of the past, which is shown in Fig. 6.

In this case, a planning section 710 issues instructions to only an inspection unit 730, with instructions for other processes being issued successively from the last section. That is, upon receipt of an inspection instruction from the planning section 710, the inspection section 730 issues an assembly instruction to the assembly section 740, the assembly section 740 issues instructions to the SMT apparatus 750, the SMT apparatus 750 issues instructions to the purchasing section 720, so that the planning section (SBU), as shown in Fig. 6, having no direct interaction with the purchasing section 720 with respect to procurement and the like.

In a 5W1H-type database (indicated by the reference numeral 11 in Fig. 1), it was verified that, by merely changing data corresponding to the origin of an arrow, which indicates the creator (the "who") of a demand, and the details of an instruction to purchase material, for example (the "how to do"), it is possible to change a business process without any changes made to table definitions or the mutual relationships therebetween.

The present invention is an information processing system executing a business process having a server (data processing apparatus) with a database (storage apparatus), information defining a business process is classified into the demand information related to request instructions from a requester and the supply information related to reports of execution based on the demand information and performance thereof, and expressed as 5W information, made up of who, whom, when, where, and what information and 1H information related to "how to do" something, wherein the processing system comprising: a first processing step in which the demand information made up of the above-noted 5W1H request information are recorded into a 5W1H-format database so as to issue the demand information, and a second processing step, in which when a task is performed in response to the above-noted demand and, in the case in which the task is completed, supply information made up of 5W1H-format information, which is a performance report with respect to the demand, is recorded in a 5W1H-format database, the first processing step and the second processing step are achieved by executing a program provided on the server apparatus.

Additionally, this system further comprising: a third processing step in which a business procedure that defines a generation sequence of a plurality of sets of the above-noted demand information and supply information related to a business process, and a business flow that defines the flow of the above-noted business procedure are recorded in the above-noted database as a business procedure master and a business process flow master, and a fourth processing step in which in accordance with procedures and flows recorded on the business procedure master and the business process flow master, business processes are executed, the third processing step and the fourth processing step are achieved by executing a program provided on the server apparatus.

In this case, the program is read into a server computer from a storage medium on which the program is stored such as a magnetic disk, a magnetic tape, an optical disk such as a CD-ROM, or a semiconductor memory or the like and loaded into main memory and executed, thereby achieving the present invention.

### BRIEF DESCRIPTION OF THE DRAWINGS

Fig. 1 is a drawing showing the configuration of an information system according to the present invention.
Fig. 2 is schematic drawing illustrating the relationship between demand, supply, and 5W1H in the present invention.
Fig. 3 is a drawing showing an example of a schematic form of the content of a demand table of the present invention.
Fig. 4 is a drawing showing the operation of the present invention.
Fig. 5 is a drawing showing the business procedures and business flow of the present invention.
Fig. 6 is a drawing showing the demand/supply flow of the conventional system.
Fig. 7 is a drawing showing the demand/supply flow of the present invention.
Fig. 8 is a drawing showing the configuration of the hardware of the present invention.
Fig. 9 is a drawing showing an example of the architecture of a basic database of the present invention.
Fig. 10 is a flow chart of the present invention.

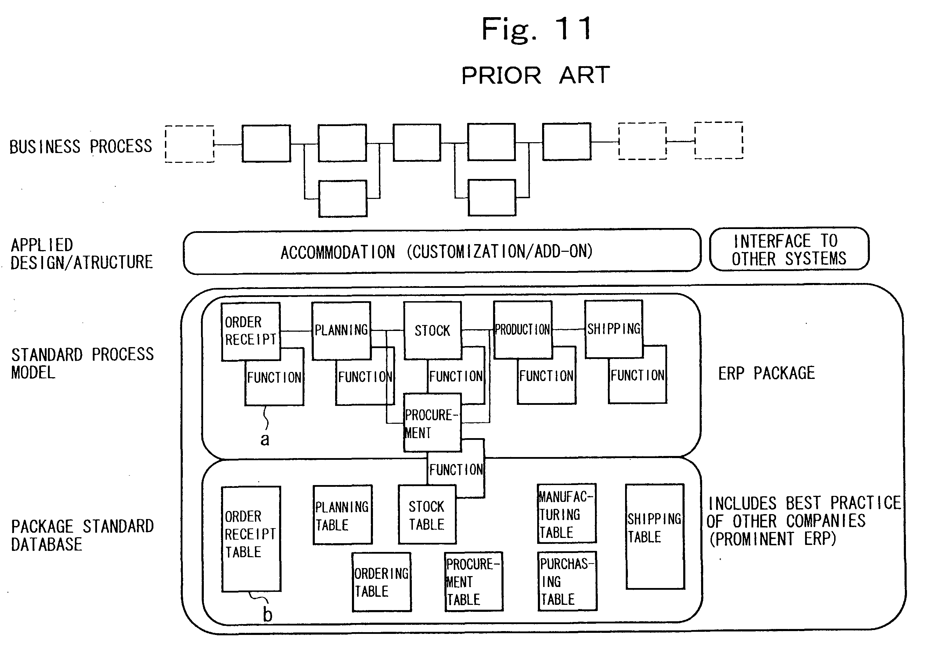

Fig. 11 is a drawing showing an example of the conventional information system (EPR).

### DETAILED DESCRIPTION OF THE PREFERRED EMBODIMENTS

Embodiments of the present invention are described in detail below, with references made to relevant accompanying drawings.

Specifically, Fig. 1 is a drawing showing the system configuration of an embodiment of the present invention. As shown in Fig. 1, this embodiment of the present invention has a database group, known as a U-RDB (unified relational database) 1, a common component group 2, and a business process and processing definition group 3, which define business processes and processing.

The U-RDB group 1 is made up of three databases including a demand/supply table 11, into which is stored demand and supply information, a general property table 12, into which is stored properties of the work flow system, and an individual property table 13, into which is stored properties with regard to demand and supply.

The common component group 2 is a group of six components, made up of a database search engine 21, a configuration development engine 22, a stock simulation 23, an option processing group 24, a POT (portable terminal)/BLP (barcode label printer) processing group 25, and a database recording/updating processing group 26. The POT (portable terminal) is a wireless terminal with a barcode reader used for controlling placing items in stock and removal of items from stock, the POT processing group being made up of a group of software which controls the wireless terminal and performing data processing with the wireless terminal, and the BLP processing group being made up of a group of software which controls the dedicated barcode printer and performing data processing.

The business process and processing definition group 3 is made up of definition masters, these being a demand/supply master 31, a business procedure master 32, a business process flow master 33, and an option processing master 34. The option processing master 34 stores individual information required for the information processing system.

To perform an actual operation, a GUI (graphical user interface) 4, which performs display by various types of screens and the like, and an interface to in-house and outside systems such as PDM, CAD/CAM/CAT, M/C control and the like 5 are provided. Of these, PDM refers to product data management, and the PDM part of the interface 5 is an interface with a product design information management system responsible for such functions as generation of product drawings and written specifications. The CAD/CAM/CAT part of the interface 5 represents the interface to computer aided design, computer aided manufacturing, and computer aided testing systems, respectively and the M/C part of the interface 5 represents an interface with automated machinery within a factory.

Each of the above-noted interfaces parts can be freely and easily implemented using a tool or language such as MS-Excel or MS-Access with which the user is familiar, in accordance with the form of each individual process, and with reference to the U-RDB 1. Access to the U-RDB 1 is performed via a transfer server, described below, using an SQL (Structured Query Language) server.

These interfaces are used in screen definition and file transfer content editing and the like, and because of the existence of a common U-RDB 1 as the base database, this processing is relatively simplified, thereby facilitating appropriate changes and additions. Above-mentioned changes and additions is also possible by the end user.

For this reason, in an embodiment of the present invention if it becomes necessary to change a business process because of business process reengineering or business process improvements, configuration and changing the structure of these interfaces does not present a bottleneck or hindrance to quick accommodation to such changes. On the contrary, because the end user can directly make accommodations as the need arises, it is not necessary as it was in the past, to issue a request to an information system section, resulting in an excessive backlog of work, and an accompanying delay in the accommodation of changes.

The operation of this embodiment of the present invention is described in detail below, with reference to relevant accompanying drawings.

The basic information in an actual business process, as shown in Fig. 2, can be categorized into two categories, requests/instructions 11A and execution/performance report 11B.

In this specification, the requests/instructions 11A are referred to as "demands" and the execution/performance report 11B is referred to as "supply".

If we analyze demand and supply, it is possible to express any type of demand or supply in the 5W4H form described below (refer to Fig. 2).

Specifically, 5W refers to information expressing who, to whom, when, where, and what, and 4H refers to information expressing how many, how long, how much, and how to do.

This information is recorded in and managed in the form of a demand/supply table that is part of the U-RDB 1, with all business processes being executed based on this recorded information.

That is, the demand and supply information for a business process are stored into the demand/supply master 31 (refer to Fig. 1), the demand/supply pair generation sequence is stored into the business procedure master 32, and the business procedure flow is stored into the business process flow master 33 (refer to Fig. 1), this various stored information being used for controlling business process processing.

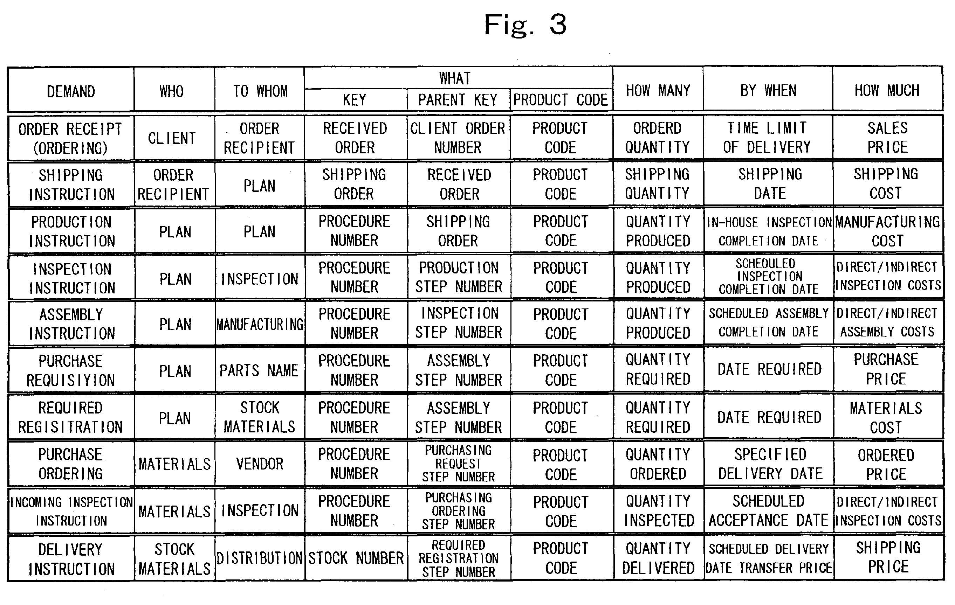

Fig. 3 shows in schematic form an example of the details of a demand table in an embodiment of the present invention. The demand include fields for information with regard to who, to whom, what (key, parent key, product code), how many, by when, and how much and, in the case of order inflow, is made up of a client, an order recipient, received order, client order number, product code, ordered quantity, time limit of delivery and sales price information. In the example shown in Fig. 3, the demands are made up of the order receipt (purchase order), shipping instructions, production instructions, inspection instructions, assembly instructions, purchase requisitions, required registration, purchase order, incoming inspection instructions, and delivery instructions. The example of Fig. 3 is an example of a type of demand, and it will be understood that the present invention is not restricted to these demand types.

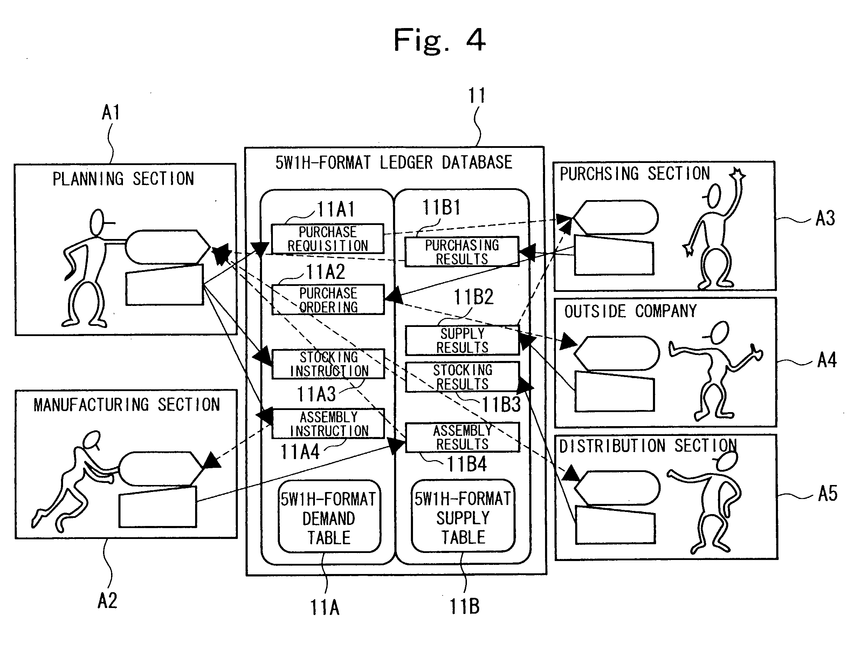

Fig. 4 is a schematic representation of the execution of an actual business process in an embodiment of the present invention, this showing part of a production system at a communication equipment factory. Business process execution in this embodiment of the present invention is described below with reference to Fig. 4. In this case, demand and supply types for the business process and information related to the associated generation sequence are priorly stored into the demand/supply master 31, the business procedure master 32, and the business process flow master 33 shown in Fig. 1.

As shown in Fig. 4, a 5W1H-format general ledger type (demand/supply) database 11 is provided in the system of the present invention. A business example of the planning section and other section associated with the planning section is described below.

A person in charge of the planning section A1 issues an assembly instruction 11A4 to the manufacturing section A2 and a purchase requisition 11A1 which is a request to procure required materials, based on a plan, into a 5W1H-format demand table 11A. In this case, the "who" is the planning section A1, and the "whom" are the manufacturing section A2 and the purchasing section A3.

Each section accesses the demand table issued to it and carries out its task and, when the task is completed, "results" information corresponding to each of the demands are stored a 5W1H-format supply table 11B of the database 11.

In this case, upon receiving the purchase requisition 11A1, the purchasing section A3 issues a purchase order demand 11A2 to a vendor A4.

When supply is made by the vendor A4, supply results 11B2 are logged as "supply", simultaneously with which "supply" information corresponding to the purchasing requisition 11A1 is stored in the supply table 11B as purchasing results 11B1.

Finally, the planning section A1 issues a stocking instruction demand 11A3 to a distributing business section A5.

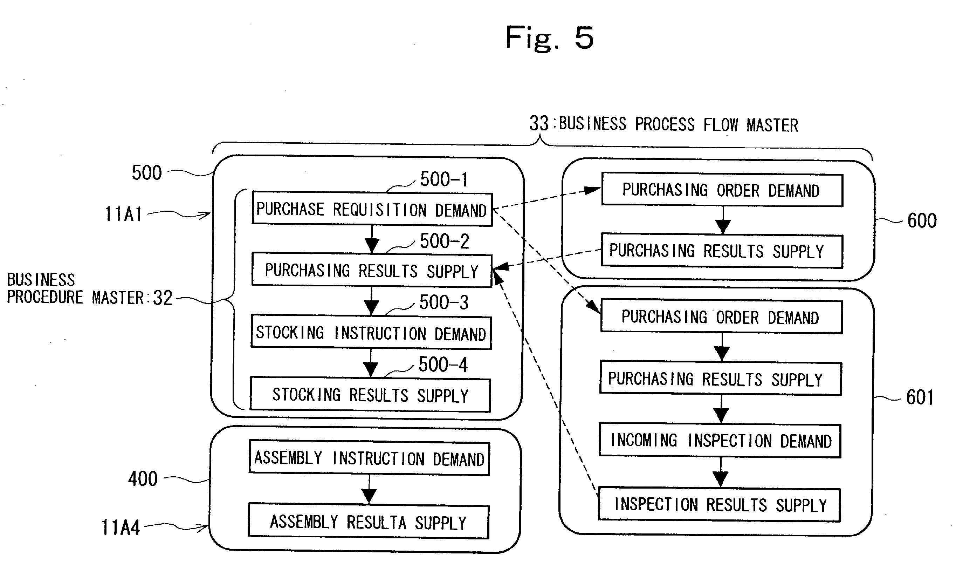

The relationship between "supply" and "demand" information and the business procedure master 32 and the business process flow master 33 is described below, with reference made to Fig. 5.

Fig. 5 is shows the drawing in which the business process example shown in Fig. 4 is stored in the business procedure master 32 and the business process flow master 33. The demand procedures issued by the planning section A1 (purchase requisitions 11A1 and assembly instructions 11A4) are expressed here as 500 and 400, respectively.

The procedure 500 defines that, first, the purchase requisition demand 500-1 is issued, and when the purchase results 500-2 which is supply corresponding to the purchase requisition demand 500-1 are recorded, a stocking instructions demand 500-3 is issued, and at completion of stocking, a stocking results supply 500-4 is logged.

The defining information of this procedure 500 is stored as the business procedure master 32, a business procedure master being formed as a group of a plurality of demands and supplies, in accordance with the generation sequence of a procedure.

Upon receiving the purchase requisition 500-1, either one of a purchase 600 without an inspection, or the procedure 601 in which the purchase is made with an inspection, is selected in accordance with the procedure for purchasing by the purchasing section A3.

When the selected non-inspected purchase procedure 600 or the inspected purchase procedure 601 is completed, the flow returns to the procedure 500. In this case, the flow 500 to 600 or 500 to 601 is defined in the business process flow master 33.

In the present invention, for all business processes processed by the information processing system, business procedures formed by groupings of demands and supplies are stored in the business procedure master 32, and the flow of the business procedures is stored in the business flow master 33.

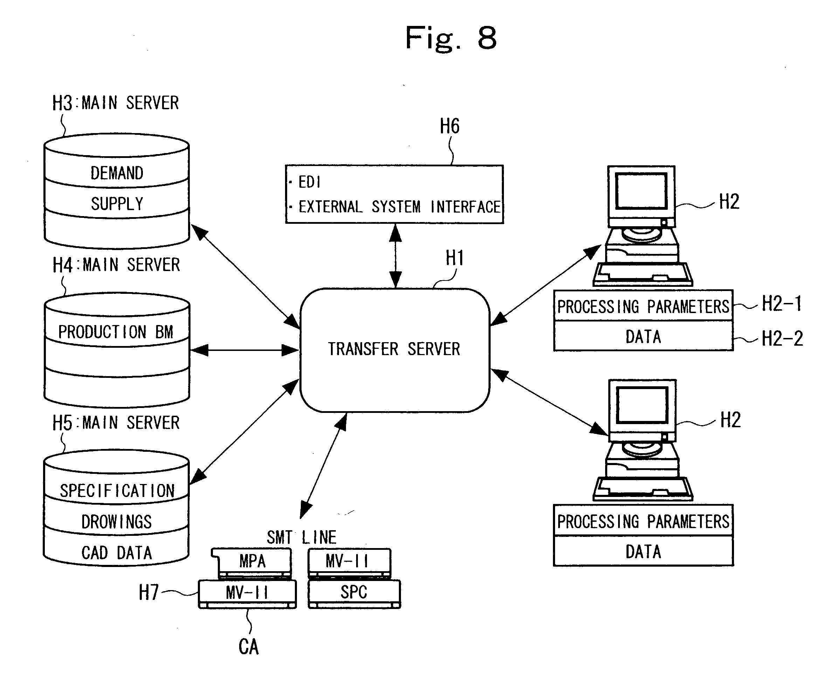

The server configuration used in the embodiment of the present invention is described below, with reference being made to Fig. 8.

Input of demands/supplies and property information, and searching thereof are performed from a terminal H2 located at a work site. This processing is performed by the sending of processing parameters H2-1 and data H2-2 to a server H1, which is referred to as a transfer server, which functions as an intermediate server, performing assignment of processing from terminals.

The transfer server H1 receives a processing parameter H2-1 sent from the terminal H2, selects a main server or other server corresponding to this processing parameter H2-1, and causes the execution of processing.

If the transfer server H1 is requested, for example, to perform demand storage processing, the main server H3 is selected and caused to execute a database storage update component 26 (refer to Fig. 1), and the demand is stored into the demand/supply table 11 (refer to Fig. 1).

If a request received by the transfer server H1 is a request to search assembly instructions and assembly drawings, the main server H3 is caused to execute the database search engine 21, and a main server H5 at which are stored drawings and specifications is selected, the required information being extracted and passed to the terminal H2.

The transfer server H1 has a function of managing connection to another system.

In this example, a work instruction to an SMT apparatus H7, results collection and transfer of information to the system H6 outside the company are performed.

This connection and transfer information is also generated as an individual property (attribute information) of demand/supply, and stored in an individual property table 13.

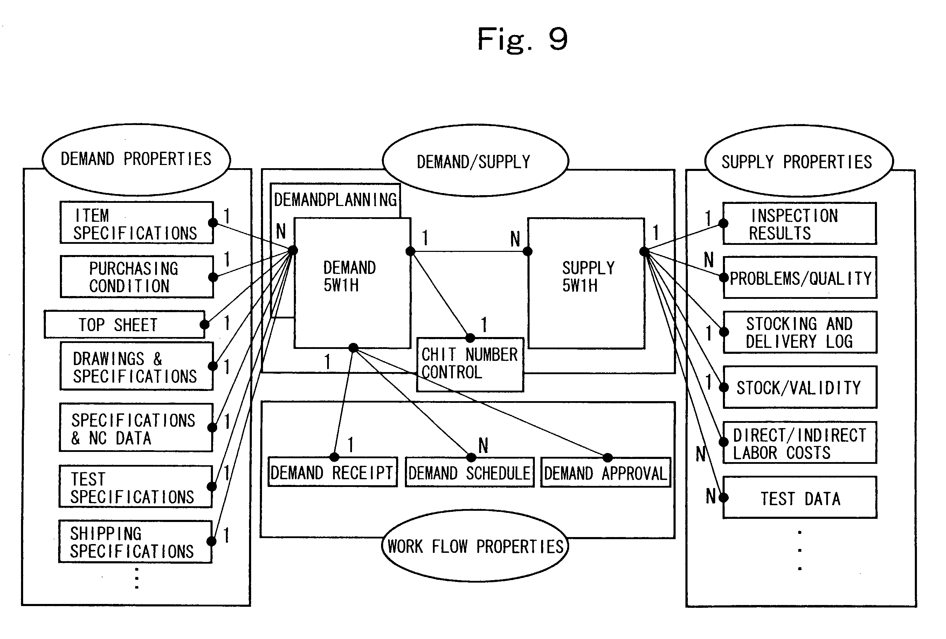

Fig. 9 shows in schematic form an example of demand properties, supply properties, and work flow properties. Referring to Fig. 9, in addition to 5W1H-format elemental information, by defining attributes which is supplementary information to 5W1H-format information as properties (demand property such as item specifications, purchasing conditions, top sheets, drawing/manufacturing specifications, factory specification NC data, test specifications, shipping specifications, and supply properties such as inspection results, problems, quality, log of stocking and sipping, amount of labor, and test data), it is possible to express any arbitrary business process. The demand properties and supply properties shown in Fig. 9 are stored in the individual property table 13 (refer to Fig. 1), and the work flow properties are stored in the general property table 12 (refer to Fig. 1).

In the present invention, connection with other in-house systems and interfacing to systems of other companies are also defined as demands/supplies (5W1H-format) and properties, these being stored in a table, with control being performed based on this stored information. For example, with respect to a business process requested from an another company's system, division is made into demand and supply information, and managed in a 5W1H-format database, thereby enabling control of the business process requested from an outside company in the same manner as describe for the above-described embodiment.

According to the present invention, information is classified into three type of information, such as instruction/request information (demand), reports/results information (supply) and attribute information (properties), this information being stored in a storage medium (5W1H-format database) such as a magnetic disk, a function to appropriately update this information is provided, thereby enabling quick implementation and operation when business process reengineering is done.

Application of the present invention facilitates integration of the system with systems outside of the company, via a transfer server, thereby effectively promoting supply chain management (SCM). Additionally, by applying the system of the present invention to other companies, such as companies with which transactions are performed, it is possible to share a database of the same format, and to establish virtual interaction between companies.

While the above example is one in which a main server group and a terminal H2 are connected by an intervening transfer server H1, it will be understood that it is also possible in applying the present invention, rather than using a transfer server H1, to directly connect the terminal H2 and the main server group, thereby enabling application of the present invention to small-scale businesses.

By adopting the technical constitution described in detail above, the present invention achieves the effect of being able to quickly change a business process.

The reason that this is possible in the present invention is that a business process is classified into a business procedures and a business process flow, each of these being managed as combinations of elemental demand information, supply information and properties information, which are managed by the master table.

In enterprise resource planning and business application packages of the past, because business algorithms were coded in procedure-type languages, when a change occurred in a business process flow or procedure, it was necessary to investigate the related software modules, consider the interaction between modules, and carefully make corrections. In contrast to this, using the present invention it is possible to change a business process by making a change in the master table.

According to the present invention, because basic information is stored in a 5W1H-format database, the present invention can be directly applied to enable a user to search information using standard searching means, thereby improving the end user work (in terms of quality, cost, and speed). According to the present invention, in comparison to a conventional system in which the end user makes a request for the information systems section, there is a significant improvement in both accuracy and speed.

Additionally, according to the present invention because it is possible for an end user to make a change in a business process, the need to make a request for the information systems section, each time a change is made, is eliminated, thereby enabling a large reduction in headcount.

## Claims

1. An information processing system having a storage apparatus and a data processing apparatus, which manages performance of a business process, in which information defining said business process is classified into demand information related to request instructions from a requester and supply information related to results report information generated by an execution of said demand, and wherein said demand and supply information being expressed as combinations of 5W1H-format elemental information made up of 5W (who, whom, when, where, and what) information and 1H (how) information, said system comprising:
a first table, provided on said storage apparatus, for registering said demand information, and
a second table, provided on said storage apparatus, for registering said supply information corresponding to said demand information, in a case in which a business process with respect to said demand information is executed and completed.

2. An information processing system having a storage apparatus and a data processing apparatus, which manages performance of a business process, in which information defining said business process is classified into demand information related to request instructions from a requester and supply information related to results report information generated by an execution of said demand, and wherein said demand and supply information being expressed as combinations of 5W1H-format elemental information made up of 5W (who, whom, when, where, and what) information and 1H (how) information, said system comprising:
a business procedure master, provided on said storage apparatus, for registering a business procedure defining a generation sequence of a plurality of sets of said demand information and supply information, and
a business process flow master, provided on said storage apparatus, for registering a process flow defining a relationship among a plurality of said business procedures.

3. An information processing system having a storage apparatus and a data processing apparatus, which manages performance of a business process, in which information defining said business process is classified into demand information related to request instructions from a requester and supply information related to results report information generated by an execution of said demand, and wherein said demand and supply information being expressed as combinations of 5W1H-format elemental information made up of 5W (who, whom, when, where, and what) information and 1H (how) information, said system comprising:
a business procedure master, provided on said storage apparatus, for registering a business procedure defining a generation sequence of a plurality of sets of said demand information and supply information,
a business process flow master, provided on said storage apparatus, for registering a process flow defining a relationship among a plurality of said business procedures,
a first table, provided on said storage apparatus, for registering said demand information, and
a second table, provided on said storage apparatus, for registering said supply information corresponding to said demand information, in a case in which a business process with respect to said demand information is executed and completed.

4. An information processing system according to claim 3, wherein said system further comprising:
a means for executing said business process in accordance with said business procedure master and said business process flow master,

5. A method for managing execution of a business process using an information processing system having a storage apparatus and a data processing apparatus, which manages performance of a business process, in which information defining said business process is classified into demand information related to request instructions from a requester and supply information related to results report information generated by an execution of said demand, and wherein said demand and supply information being expressed as combinations of 5W1H-format elemental information made up of 5W (who, whom, when, where, and what) information and 1H (how) information, said method comprising the steps of:
registering a business procedure defining a generation sequence of a plurality of sets of said demand information and supply information as a business procedure master on said storage apparatus,
registering a process flow defining a relationship among a plurality of said business procedures as a business process flow master on said storage apparatus,
registering said demand information on a first table provided on said storage apparatus, and
registering said supply information corresponding to said demand information on a second table provided on said storage apparatus, in a case in which said business process with respect to said demand information is executed and completed.

6. A computer program for managing execution of a business process using an information processing system having a storage apparatus and a data processing apparatus, which manages performance of a business process, in which information defining said business process is classified into demand information related to request instructions from a requester and supply information related to results report information generated by an execution of said demand, and wherein said demand and supply information being expressed as combinations of 5W1H-format elemental information made up of 5W (who, whom, when, where, and what) information and 1H (how) information, said computer program causing said data processing apparatus to execute sequential processing comprising the steps of:
registering a business procedure defining a generation sequence of a plurality of sets of said demand information and supply information as a business procedure master on said storage apparatus,
registering a process flow defining a relationship among a plurality of said business procedures as a business process flow master on said storage apparatus,
registering said demand information on a first table provided on said storage apparatus, and
registering said supply information corresponding to said demand information on a second table provided on said storage apparatus, in a case in which said business process with respect to said demand information is executed and completed.
